# EUROPEAN PATENT SPECIFICATION

(11) **EP 3 432 592 B1**
(45) Date of publication and mention of the grant of the patent: **21.07.2021**
(21) Application number: 17182570.6
(22) Date of filing: 21.07.2017
(51) Int. Cl.: H04Q 9/00, G08C 23/00

(54) **ELECTRICAL MEASUREMENT DEVICE AND METHOD FOR READING OUT AT LEAST ONE STATUS INFORMATION OF AN ELECTRICAL MEASUREMENT DEVICE IN AN UNPOWERED STATE**
ELEKTRISCHE MESSVORRICHTUNG UND VERFAHREN ZUM AUSLESEN MINDESTENS EINER STATUSINFORMATION EINER ELEKTRISCHEN MESSVORRICHTUNG IN EINEM AUSGESCHALTETEN ZUSTAND
DISPOSITIF DE MESURE ÉLECTRIQUE ET PROCÉDÉ POUR LIRE AU MOINS UNE INFORMATION D'ÉTAT D'UN DISPOSITIF DE MESURE ÉLECTRIQUE DANS UN ÉTAT NON ALIMENTÉ

(43) Date of publication of application: 23.01.2019
(73) Proprietor: Rohde & Schwarz GmbH & Co. KG, 81671 München (DE)
(72) Inventor: Sterzbach, Bernhard, 81541 München (DE)
(74) Representative: Prinz & Partner mbB

(56) References cited:
- EP-A1- 2 837 979
- WO-A1-2016/138549
- JP-A- S5 934 551
- US-A1- 2017 097 864

## Description

The invention relates to an electrical measurement device and a method for reading out at least one status information of an electrical measurement device in an unpowered state.

Electrical measurement devices, for instance electrical measurement devices for radio frequency signals, have to be identified, checked, maintained, inventoried, tracked, calibrated and/or handled. For these purposes, the electrical measurement devices typically comprise a sticker or a tag that is attached to a housing or a packaging of the electrical measurement device in order to provide the desired information. This information can be accessed easily once the user has access to the housing or the packaging of the electrical measurement device. For instance, the information provided may comprise a serial number of the electrical measurement device and/or its type.

However, changeable status information, like a calibration date and/or self-test results, is usually stored electronically within the device on a memory such that the user of the electrical measurement device has to access the memory via a user interface of the electrical measurement device, for instance a graphical user interface, in order to retrieve the information. Alternatively, the information stored may be accessed by a remote control device that is connected to the electrical measurement device, for instance via a remote control interface.

Irrespective of the kind of interface used, it is required that the electrical measurement device is still operable which means that it is generally working and it is charged or energized sufficiently. In addition, a fault or an error may occur resulting in the shutdown (power off) of the electrical measurement device such that a user is not able to retrieve the (changeable) status information stored within the electrical measurement device. Accordingly, it is difficult to determine the reason for this shutdown, in particular provided that the reason for the shutdown is an error or a fault.

Accordingly, there is a need for an electrical measurement device that provides (changeable) status information in an easy accessible manner.

WO 2016/138549 A1 discloses a method for configuring an electronic element such as a ballast in a lighting system comprising the following steps: retrieving configuration information from a machine readable medium, especially a QR-code, by means of a configuring device; sending the retrieved configuration information from the configuring device to the electronic element in the lighting system; and storing the configuration information into an information storage means of the electronic element, wherein the method is applied to the lighting system in an unpowered state of the electronic element.

JP S59 34551 A discloses a control unit for a copying machine, wherein, when an abnormal state is present, the control unit stops the copy operation, holds the stored contents of a memory, and displays the abnormality using a display unit. Even when a user of the copying machine turns off the power supply of the copying machine after the occurrence of the abnormality state, the stored contents are retained since the memory has a battery back system.

The invention provides an electrical measurement device comprising at least one electrical measurement unit, a processing unit, a status display and a memory, wherein the memory is configured to store at least one status information of the electrical measurement device, wherein the electrical measurement device has at least a power off operation mode, and wherein the processing unit is configured to control the status display in the power off operation mode such that the latest status information of the electrical measurement device stored in the memory is displayed on the status display.

The invention is based on the finding that the electrical measurement device is able to indicate the latest relevant status information prior to its shutdown (power off) in order to inform a user of the electrical measurement device in an easy and efficient manner as the user has direct access to the status display. Thus, the user can easily retrieve the status information without the need of switching on the electrical measurement device and access a (graphical) user interface. Particularly, it is possible to provide information about the electrical measurement device with regard to a failure that causes the (automatic) shutdown of the electrical measurement device. For this purpose, the electrical measurement device comprises the power off operation mode that initiates the shutdown of the electrical measurement device in a controlled manner such that it is ensured that the latest status information is displayed on the non-volatile status display. This means that the status of the electrical measurement device is displayed that is actual prior to powering off the electrical measurement device.

Generally, the electrical measurement device may comprise at least another operation mode besides the power off operation mode, for instance a regular operation mode. In the regular operation mode, the electrical measurement device may display actual information of the electrical measurement device such that the user is enabled to retrieve the actual status information of the electrical measurement device during the regular operation.

Alternatively, the status display may be shut down during the regular operation of the electrical measurement device in order to reduce the computational power for updating the status information displayed and, thus, the power consumption.

According to an aspect, the status display comprises at least an electrophoretic display region, in particular wherein the status display is an electrophoretic display. Generally, electrophoretic displays are based on the electrophoreses which relates to the motion of dispersed particles relative to a fluid due to the influence of an electromagnetic field, in particular an electric field. Thus, the processing unit controls the status display during the power off operation mode such that the particles used for displaying purposes are arranged in the intended manner in order to display the status information. Accordingly, the processing unit controls the electric field appropriately.

According to another aspect, the status information displayed remains visible on the status display in an unpowered state of the status display. Thus, the status display is configured such that it does not require any power to display the status information. Accordingly, it is ensured that the status information is accessible even though the status display is powered off, in particular the whole electrical measurement device. Therefore, the status information is accessible during the delivery of the electrical measurement device and/or when a failure or an error occurs. Hence, important and relevant information can be displayed or retrieved even though the electrical measurement device is shut down.

The status information is visible on the electrical measurement device independently of the power status of the electrical measurement device. As the status display cannot be detached inadvertently, the risk of errors or damages associated with the attachment and removal of tags or stickers is eliminated appropriately.

Particularly, the memory is configured to store data cryptographically protected by a license key, in particular a software component to be accessed. This ensures that the electrical measurement device provides data, in particular a software component, in a protected manner wherein this data can only be accessed by using a license key. Therefore, it is required that the user has the license key in order to access the data.

According to an embodiment, the status information displayed comprises at least one computer-readable information and/or at least one human readable information, in particular wherein the computer-readable information is provided by a quick response code (QR code). Thus, the status information can be easily retrieved by the user as it may be provided by text, graphics and/or signs which can be understood by the user directly without any technical assistance. Alternatively or supplementary, the status information may be displayed by using computer-readable information, for instance a computer-readable code, such that more information can be gathered in a compact manner since the user has to read out the status information by using a detection device, for instance a mobile phone or a smartphone, which is able to detect and process the computer-readable information appropriately. For instance, the computer-readable information is encrypted in a quick response code (QR code) to be scanned with a smartphone for encoding a uniform resource locator (URL), for instance. Thus, the user may be directed to a support website for gathering further information about the status of the electrical measurement device and/or further actions to be done for restarting the electrical measurement device.

For instance, the computer-readable information includes a cryptographically generated code authenticating the status information displayed. Thus, the detection device can simultaneously verify if the status information provided is correct.

In general, the status information displayed may comprise information about a license key, the device type, the serial number, the internet protocol network address, the network name, the network address, the calibration status of the electrical measurement unit, the expiration date of the calibration, at least one present hardware option, at least one present software option, at least one available or compatible hardware option, at least one available or compatible software option, the operating state, health information of the electrical measurement device, the reason for the shutdown of the electrical measurement device, handling instructions, and/or general work orders. Accordingly, many information about the electrical measurement device can be displayed as a status information that enables the user of the electrical measurement device to obtain information about the current status. The status information can be displayed directly on the status display or the status information is indirectly provided via a computer-readable information (code) that can be accessed by using the detection device for encoding the status information.

In general, maintenance information, identifying information, configuration information, health information, calibration information and/or failure information can be provided as the status information.

According to another aspect, the electrical measurement device comprises a user interface, in particular wherein the user interface is provided by the status display. The user may input commands via the user interface. For instance, the status display comprises a touch sensitive region besides the electrophoretic display region. Accordingly, the touch sensitive region or the touch sensitive display can be used as the user interface.

According to a certain embodiment, a near field communication unit (NFC unit) is provided that is connected to the processing unit. The processing unit may be configured to provide the status information in a similar manner to the near filed communication unit such that the status information provided can also be read out via the near field communication unit. Accordingly, the user of the electrical measurement device can obtain the status information by using an appropriate detection device, for instance a smartphone or any other detection device having a near field communication reader.

The near field communication unit provided by the electrical measurement device can be established by a near field communication tag that has no power consumption as it is activated by the near field communication reader of the detection device, in particular stimulated such that the information is transmitted.

According to a certain aspect, the user interface may be provided by the near field communication unit. Accordingly, near field communication unit may be configured to receive commands via an electronic device used by the user. For instance, the electronic device may be established by a smartphone or the like such that the smartphone is used as the detection device for reading out the status information and the electronic device for transmitting the commands simultaneously.

Particularly, a display module is provided that is configured to accommodate a standardized display unit used as the status display, in particular wherein the standardized display unit is an electronic ink display. The status display can be exchanged easily as it can be disassembled from the display module. For instance, the display module may have a certain interface enabling the easy exchange of the status display.

Alternatively or supplementary, an interposer is provided that is configured to interface the status display. Thus, the status display can be exchanged easily as the interposer provides an electrical interface routing to another electrical interface.

Moreover, the electrical measurement device may have a power on operation mode, wherein the processing unit is configured to control the status display in the power on operation mode such that at least one status information and/or at least one result of an internal self-test is displayed on the status display, in particular information about failures being unsuitable to be indicated otherwise. The status display can be used to provide information regarding the status of the electrical measurement device during its switch-on phase. Thus, relevant information is accessible immediately. For instance, the status display may display the status of hardware components failures such as a graphic card failure of the main display that cannot be indicated otherwise.

In general, the electrical measurement device may be a complex and precise electrical measurement device. Such a complex and precise electrical measurement device is typically used for measuring radio frequency signals. For instance, the electrical measurement device may be a radio communication tester.

Particularly, the processor unit corresponds to a control and/or analyzing unit as it inter alia controls the status display appropriately. Moreover, the processor unit may analyze internal measurement values such as current consumption in order to perform self-tests.

Thus, the processor unit may be able to check the status information gathered with regard to relevance such that the most relevant status information is provided to the user. For instance, status information with regard to a failure or an error is highly relevant as such an information should be brought forward to the user's attention in order to protect the electrical measurement device.

The invention also provides a method for reading out at least one status information of an electrical measurement device in an unpowered state, with the following steps:
- Providing the electrical measurement device as described above,
- Providing the latest status information of the electrical measurement device to be read out in an electrical manner during a power off operation mode of the electrical measurement device such that the latest status information can be retrieved in the unpowered state of the electrical measurement device, and
- Reading out the latest status information in an unpowered state of the electrical measurement device from a status display of the electrical measurement device by human eye or by using a detection device.

As already indicated above, it is possible to retrieve status information about the electrical measurement device in its unpowered state such that the reason for the power off (shutdown) is indicated appropriately. Hence, the user is able to understand what has happened to the electrical measurement device, for instance a failure during a measurement or a general hardware error.

The forgoing aspects and many of the intended advantages of the claimed subject matter will become more readily appreciated as the same becomes better understood by reference to the following detailed description, when taken in conjunction in the accompanying drawings, wherein:
- Figure 1 schematically shows an electrical measurement device according to the invention,
- Figure 2 shows the status display of the electrical measurement device in a first state,
- Figure 3 shows the status display of the electrical measurement device in a second state,
- Figure 4 shows the status display of the electrical measurement device in a third state,
- Figure 5 shows the status display of the electrical measurement device in a fourth state,
- Figure 6 shows the status display of the electrical measurement device in a fifth state, and
- Figure 7 shows the status display of the electrical measurement device in a sixth state.

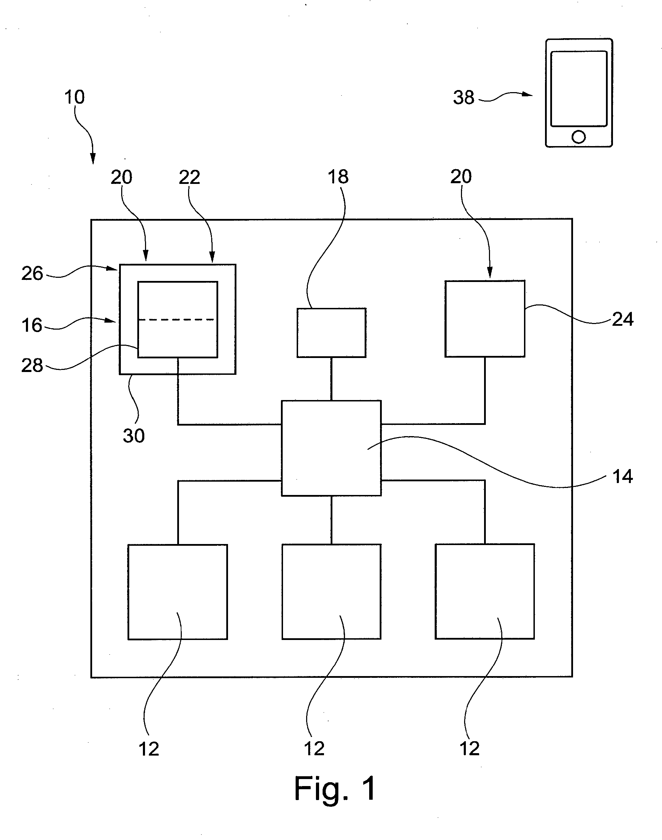

In Figure 1, an electrical measurement device 10 is shown that can be used for detecting and processing electromagnetic signals, for instance radio frequency signals. Hence, the electrical measurement device 10 is a complex and precise electrical measurement device.

In the shown embodiment, the electrical measurement device 10 comprises three (different) electrical measurement units 12 for acquiring different measurement variables and a processing unit 14.

The processing unit 14 is connected to the electrical measurement units 12 and to a status display 16 configured to display status information of the electrical measurement device 10.

Further, the electrical measurement device 10 comprises a memory 18 that can be accessed by the processing unit 14 in order to retrieve information, in particular status information of the electrical measurement device 10, that can be forwarded via the processing unit 14 to the status display 16 for displaying purposes as will be described later. In other words, the processing unit 14 controls the status display 16 in order to display the status information stored in the memory 18.

In the shown embodiment, the electrical measurement device 10 also comprises a user interface 20.

The user interface 20 can be provided by the status display 16 that additionally comprises a touch sensitive display region 22. Accordingly, the status display 16 has two regions for displaying information and for inputting commands. Accordingly, the user of the electrical measurement device 10 is enabled to input commands that are processed by the electrical measurement device 10, in particular its processing unit 14.

Alternatively, the user interface 20 can be provided by a separate display 22, in particular a touch sensitive one.

Furthermore, the electrical measurement device 10 has a near field communication unit 24 (NFC unit) that is connected to the processing unit 14 such that the processing unit 14 is configured to forward data or information stored in the memory 18 to the NFC unit 24. Thus, this data or information can be provided via the near field communication unit 24 to the user.

The near field communication unit 24 of the electrical measurement device 10 may be established by a near field communication tag that is activated by a separately formed near field communication reader as will be described later.

Alternatively, the near field communication unit 24 can also provide the user interface 20 such that the user is enabled to input commands via the near field communication unit 24.

The status display 16 of the electrical measurement device 10 comprises at least one electrophoretic display region. Particularly, the status display 16 is established by an electrophoretic display. Thus, the status display 16 is enabled to display status information that remains visible on the status display 16 even though the status display 16 is unpowered, in particular the whole electrical measurement device 10.

For instance, the electrical measurement device 10 comprises a display module 26 that is configured to accommodate a standardized display unit 28, for instance an electronic ink display, that is used as the status display 16. Accordingly, the display module 26 ensures that the status display 16 can be exchanged easily.

Alternatively or supplementary, the electrical measurement device 10 has an interposer 30 that is configured to interface the status display 16 such that the status display 16 can be exchanged easily. The interposer 30 may be part of the display module 26.

Generally, the memory 18 is configured to store at least one status information of the electrical measurement device 10. The status information may comprise information about a license key, the device type, the serial number, the internet protocol network address, the network name, the network address, the calibration status of the electrical measurement unit, the expiration date of the calibration, at least one present hardware option, at least one present software option, at least one available or compatible hardware option, at least one available or compatible software option, the operating state, health information of the electrical measurement device, the reason for the shut down of the electrical measurement device, handling instructions, and/or general work orders.

In general, the status information may be at least one of maintenance information, identifying information, configuration information, health information and/or failure information.

Furthermore, the memory 18 is configured to store data cryptographically protected by a license key. This data cryptographically protected and stored within the memory 18 may be a software component that can be accessed when using the license key. As mentioned above, the license key may be displayed on the status display 16 as the status information displayed.

During operation of the electrical measurement device 10, the processing unit 14 is configured to detect a shutdown of the electrical measurement device 10 in order to initiate a power off operation mode of the electrical measurement device 10.

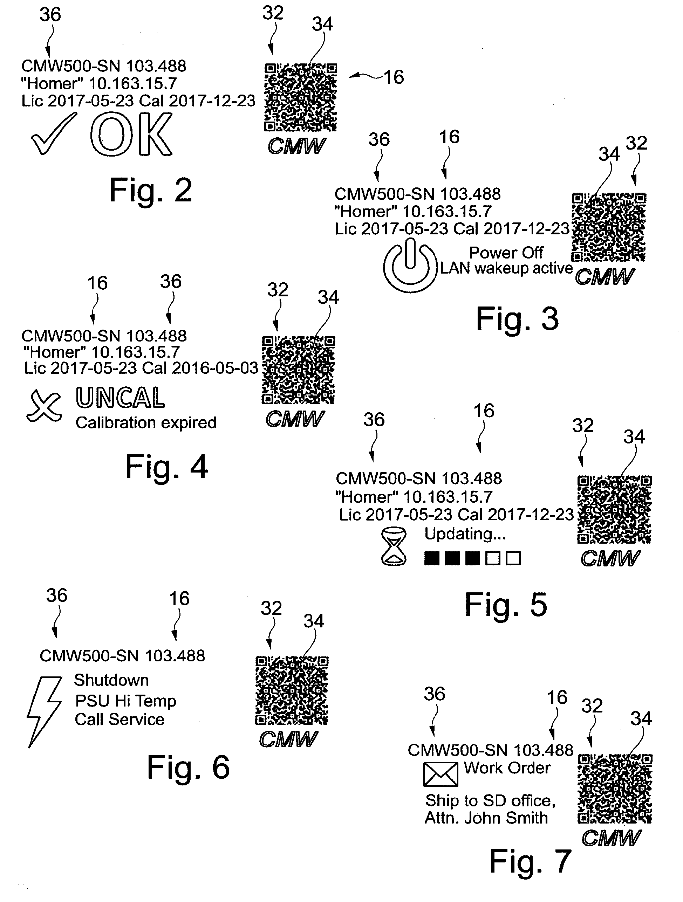

In this power off operation mode, the processing unit 14 accesses the memory 18 in order to retrieve the latest (important and relevant) status information that is stored in the memory 18. This latest status information is forwarded to the status display 16 in order to display the status information appropriately. In other words, the processing unit 14 controls the status display 16 appropriately in order to provide this information directly or indirectly. Thus, the processing unit 14 controls the status display 16 in an appropriate manner in order to ensure that the status information is retrievable for the user as shown in the embodiments of Figures 2 to 7.

Once the electrical measurement device 10 is shut down, the status information displayed on the status display 16 may comprise at least one computer-readable information 32 such as a quick response code 34 (QR code) and/or at least one human readable information 36, for instance text information, graphics and/or signs. Alternatively to the quick response code 34, the computer-readable information 32 may be provided by a barcode.

The computer-readable information 32 may include a cryptographically generated code authenticating the status information displayed. This means that the user who uses a detection device 38 (please refer to Figure 1) for retrieving the information of the computer-readable information 32 simultaneously verifies if the information displayed is correct. The detection device 38 may be a mobile phone, a smartphone or any other suitable user end device.

In Figures 2 to 7, several different states of the status display 16 are shown that provide different status information of the electrical measurement device 10.

Generally, the latest status information relates to the latest one of a certain type. As mentioned above, the status information may comprise information regarding maintenance, identifying, configuration, health and/or failure. Accordingly, the latest information of these different types may be displayed or provided in a retrievable manner, for instance as a computer-readable information.

The processing unit 14 may be configured to evaluate the relevance of the different information gathered such that the most important ones are provided to the user such as information with regard to errors, failures and faults of the electrical measurement device 10.

In Figure 2, information about a license date, a calibration expiration date, an internet protocol network address, a network name, a serial number, a device type and the health/status of the electrical measurement device 10 are displayed as human readable information 36. The health/status is indicated by the term "OK" as well as the corresponding sign. Further, a QR code 34 is displayed as a computer-readable information 32 that can be read and processed by the detection device 38 in order to retrieve further information, for instance any actions required. The QR code 34 may provide a direct link to a website such as a support site of the electrical measurement device 10, in particular its manufacturer.

In Figure 3, the status of the electrical measurement device 10 is shown in another state wherein the health/status changed with respect to the one in Figure 2. It is indicated that the electrical measurement device 10 is powered off wherein the status of the local area network (LAN) wake-up function is also indicated as being activated. Thus, the user easily retrieves the status information of the electrical measurement device 10 that it can be waked up via LAN.

In Figure 4, another status of the status display 16 of the electrical measurement device 10 is shown wherein the user of the electrical measurement device 10 is informed that the calibration of the electrical measurement device 10 has expired. Thus, the user is informed about the calibration status of the electrical measurement device 10, in particular at least one of its measurement units 12. Even though the electrical measurement device 10 is in its unpowered state, the user can directly retrieve this information due to the status display 16 displaying this information in an unpowered state. Accordingly, the user can directly notice that the electrical measurement device 10 shall be calibrated prior to measurements for certification tests, for instance.

In Figure 5, another status is shown according to which the user retrieves the information that the electrical measurement device 10 is updating its software. Accordingly, the user is enabled to directly understand why the electrical measurement device 10 is unable to boot even though the power on button was pressed.

In Figure 6, the electrical measurement device 10 displays the reason for its shutdown. In the shown embodiment, the electrical measurement device 10 has been shut down due to a high temperature failure of the power supply unit (PSU). Further, instructions for the user of the electrical measurement device 10 are also displayed according to which the user shall call the service. A failure of the power supply unit is a critical error that may cause damages to the whole electrical measurement device 10 during its next powering. Accordingly, the user is directly informed to consult the service prior to switching on the electrical measurement device 10 next time in order to prevent any damages.

Furthermore, the electrical measurement device 10 may display information regarding its shipping status as shown in Figure 7. Accordingly, it is ensured that the electrical measurement device 10 can be shipped to the correct recipient even though a postal sticker or tag was lost or detached.

Generally, the computer-readable information 32 provided may comprise information with regard to at least one present hardware option, at least one present software option, at least one available or compatible hardware option, at least one available or compatible software option, handling instructions, and/or general work orders. This information may be provided by a website encoded in the QR code 34, for instance.

The information shown in Figures 2 to 7 are only examples of the several information that can be provided via the status display 16 in the unpowered state of the electrical measurement device 10.

This is enabled due to the power off operation mode according to which the processing unit 14 accesses the memory for retrieving the different stored status information. Accordingly, the most actual status information is provided via the status display 16.

All the different status information can be provided via the near field communication unit 24 as well as such that the user of the electrical measurement device 10 may access the status information of the electrical measurement device 10 by using the detection device 38 that interacts with the near field communication unit 24, in particular the near field communication tag. Thus, the user is enabled to read out the status information in the unpowered state of the electrical measurement device 10 even though he is not able to read the status display 16 due to a packaging, its position or any other reasons.

In general, the status information can be provided in a redundant manner due to the near field communication unit 24 and the status display 16.

As already mentioned above, the status information to be read out is provided in an electrical manner to the dedicated unit, namely the NFC unit 24 and/or the status display 16, for providing the status information as the processing unit 14 detects the shutdown of the electrical measurement device 10 and initiates the power off operation mode in order to retrieve the latest status information of the electrical measurement device 10 that is provided appropriately.

Moreover, the electrical measurement device 10 has a power on operation mode, wherein the processing unit 14 is configured to control the status display 16 such that at least one status information and/or at least one result of an internal self-test is displayed on the status display 16. Thus, the latest information is also displayed during the switching on phase of the electrical measurement device 10. Hence, information about failures being unsuitable to be indicated otherwise can be indicated via the status display 16, for instance a failure of the main display used during the operation of the electrical measurement device 10.

Furthermore, the electrical measurement device 10 may have a regular operation mode in which the status display 16 is switched off in order to reduce the power consumption. In fact, the (regular) main display of the electrical measurement device 10 can be used for displaying any relevant information in the regular operation mode as the regular operation mode ensures that the components of the electrical measurement device 10 work as intended.

Therefore, at least one status information of the electrical measurement device 10 can be read out even though the electrical measurement device 10 is in its unpowered state. Once the processing unit 14 detects an upcoming power off, it initiates the power off operation mode of the electrical measurement device 10 such that the latest status information is gathered from the memory 18 in order to be displayed (directly or indirectly) on the status display 16. The processing unit 14 controls the status display 16 in an electrical manner appropriately. Accordingly, the status information to be read out is provided in an electrical manner during the power off operation mode of the electrical measurement device 10.

Then, the status information can be read out easily in the unpowered state of the electrical measurement device 10 as it is directly displayed on the status display 16 such that the status information can be retrieved by human eye. Alternatively or supplementary, the status information is encoded in a computer-readable information 32 that can be decoded by using a detection device 38 such as a smartphone or any other suitable device.

This ensures that the user can retrieve many information, in particular (changeable) status information, health information, maintenance information, identifying information, configuration information, calibration information and/or failure information without the need of powering the electrical measurement device 10 for gathering this information.

Accordingly, an electrical measurement device 10 and a method for reading out at least one status information of an electrical measurement device 10 in an unpowered state are provided in order to ensure that relevant and changeable status information of the electrical measurement device 10 can be retrieved easily.

## Claims

1. An electrical measurement device (10) comprising at least one electrical measurement unit (12), a processing unit (14), a status display (16) and a memory (18), wherein the memory (18) is configured to store at least one status information of the electrical measurement device (10), wherein the electrical measurement device (10) has at least a power off operation mode, and wherein the processing unit (14) is configured to control the status display (16) in the power off operation mode such that the latest status information of the electrical measurement device (10) stored in the memory (18) is displayed on the status display (16).

2. The electrical measurement device (10) according to claim 1, wherein the status display (16) comprises at least an electrophoretic display region, in particular wherein the status display is an electrophoretic display.

3. The electrical measurement device (10) according to claim 1 or 2, wherein the status information displayed remains visible on the status display (16) in an unpowered state of the status display (16).

4. The electrical measurement device (10) according to any of the preceding claims, wherein the memory (18) is configured to store data cryptographically protected by a license key, in particular a software component to be accessed.

5. The electrical measurement device (10) according to any of the preceding claims, wherein the status information displayed comprises at least one computer-readable information (32) and/or at least one human readable information (36), in particular wherein the computer-readable information (32) is provided by a quick response code (34).

6. The electrical measurement device (10) according to claim 5, wherein the computer-readable information (32) includes a cryptographically generated code authenticating the status information displayed.

7. The electrical measurement device (10) according to any of the preceding claims, wherein the status information displayed comprises information about a license key, the device type, the serial number, the internet protocol network address, the network name, the network address, the calibration status of the electrical measurement unit, the expiration date of the calibration, at least one present hardware option, at least one present software option, at least one available or compatible hardware option, at least one available or compatible software option, the operating state, health information of the electrical measurement device, the reason for the shut down of the electrical measurement device, handling instructions, and/or general work orders.

8. The electrical measurement device (10) according to any of the preceding claims, wherein the electrical measurement device (10) comprises a user interface (20), in particular wherein the user interface (20) is provided by the status display (16).

9. The electrical measurement device (10) according to any of the preceding claims, wherein a near field communication unit (24) is provided that is connected to the processing unit (14).

10. The electrical measurement device (10) according to claims 8 and 9, wherein the user interface (20) is provided by the near field communication unit (24).

11. The electrical measurement device (10) according to any of the preceding claims, wherein a display module (26) is provided that is configured to accommodate a standardized display unit used as the status display (16), in particular wherein the standardized display unit is an electronic ink display.

12. The electrical measurement device (10) according to any of the preceding claims, wherein an interposer (30) is provided that is configured to interface the status display (16).

13. The electrical measurement device (10) according to any of the preceding claims, wherein the electrical measurement device (10) has a power on operation mode, wherein the processing unit (14) is configured to control the status display (16) in the power on operation mode such that at least one status information and/or at least one result of an internal self-test is displayed on the status display (16), in particular information about failures being unsuitable to be indicated otherwise.

14. The electrical measurement device (10) according to any of the preceding claims, wherein the electrical measurement device (10) is a complex and precise electrical measurement device.

15. A method for reading out at least one status information of an electrical measurement device (10) in an unpowered state, with the following steps:
- Providing the electrical measurement device (10) according to any of the preceding claims,
- Providing the latest status information of the electrical measurement device (10) to be read out in an electrical manner during a power off operation mode of the electrical measurement device (10) such that the latest status information can be retrieved in the unpowered state of the electrical measurement device (10), and
- Reading out the latest status information in an unpowered state of the electrical measurement device (10) from a status display (16) of the electrical measurement device (10) by human eye or by using a detection device (38).

## Patentansprüche

1. Eine elektrische Messvorrichtung (10) mit mindestens einer elektrischen Messeinheit (12), einer Verarbeitungseinheit (14), einer Statusanzeige (16) und einem Speicher (18), wobei der Speicher (18) so konfiguriert ist, dass mindestens eine Statusinformation der elektrischen Messvorrichtung (10) gespeichert wird, wobei die elektrische Messvorrichtung (10) über mindestens einen ausgeschalteten Betriebsmodus verfügt, und wobei die Verarbeitungseinheit (14) so konfiguriert ist, dass die Statusanzeige (16) im ausgeschalteten Betriebsmodus so gesteuert wird, dass die letzte Statusinformation der elektrischen Messvorrichtung (10), die im Speicher (18) gespeichert wird, auf der Statusanzeige (16) angezeigt wird.

2. Die elektrische Messvorrichtung (10) nach Anspruch 1, wobei die Statusanzeige (16) mindestens einen elektrophoretischen Anzeigebereich aufweist, insbesondere wobei die Statusanzeige ein elektrophoretisches Display ist.

3. Die elektrische Messvorrichtung (10) nach Anspruch 1 oder 2, wobei die angezeigte Statusinformation auf der Statusanzeige (16) in einem ausgeschalteten Zustand der Statusanzeige (16) sichtbar bleibt.

4. Die elektrische Messvorrichtung (10) nach einem der vorstehenden Ansprüche, wobei der Speicher (18) so konfiguriert ist, dass Daten gespeichert werden, die durch einen Lizenzschlüssel kryptographisch geschützt sind, insbesondere eine Software-Komponente, auf die zugegriffen werden soll.

5. Die elektrische Messvorrichtung (10) nach einem der vorstehenden Ansprüche, wobei die angezeigte Statusinformation mindestens eine computerlesbare Information (32) und/oder mindestens eine menschenlesbare Information (36) umfasst, insbesondere wobei die computerlesbare Information (32) durch einen Quick-Response-Code (34) bereitgestellt wird.

6. Die elektrische Messvorrichtung (10) nach Anspruch 5, wobei die computerlesbare Information (32) einen kryptographisch generierten Code umfasst, der die angezeigte Statusinformation authentifiziert.

7. Die elektrische Messvorrichtung (10) nach einem der vorstehenden Ansprüche, wobei die angezeigte Statusinformation Informationen über einen Lizenzschlüssel, den Gerätetyp, die Seriennummer, die Internet-Protokoll-Netzwerk-Adresse, den Netzwerknamen, die Netzwerkadresse, den Kalibrierungsstatus der elektrischen Messeinheit, das Ablaufdatum der Kalibrierung, mindestens eine vorhandene Hardware-Option, mindestens eine vorhandene Software-Option, mindestens eine verfügbare oder kompatible Hardware-Option, mindestens eine verfügbare oder kompatible Software-Option, den Betriebszustand, Informationen über den Status der elektrischen Messvorrichtung, den Grund für das Ausschalten der elektrischen Messvorrichtung, Handhabungsanweisungen und/oder allgemeine Arbeitsaufträge umfasst.

8. Die elektrische Messvorrichtung (10) nach einem der vorstehenden Ansprüche, wobei die elektrische Messvorrichtung (10) eine Benutzerschnittstelle (20) aufweist, insbesondere wobei die Benutzerschnittstelle (20) durch die Statusanzeige (16) bereitgestellt wird.

9. Die elektrische Messvorrichtung (10) nach einem der vorstehenden Ansprüche, wobei eine Nahfeldkommunikationseinheit (24) bereitgestellt wird, die mit der Verarbeitungseinheit (14) verbunden ist.

10. Die elektrische Messvorrichtung (10) nach Anspruch 8 und 9, wobei die Benutzerschnittstelle (20) durch die Nahfeldkommunikationseinheit (24) bereitgestellt wird.

11. Die elektrische Messvorrichtung (10) nach einem der vorstehenden Ansprüche, wobei ein Anzeigemodul (26) bereitgestellt wird, das so konfiguriert ist, dass hier eine standardisierte Anzeigeeinheit untergebracht ist, die als die Statusanzeige (16) verwendet wird, insbesondere wobei die standardisierte Anzeigeeinheit ein elektronisches Ink-Display ist.

12. Die elektrische Messvorrichtung (10) nach einem der vorstehenden Ansprüche, wobei ein Zwischenelement (30) bereitgestellt wird, das so konfiguriert ist, dass es mit der Statusanzeige (16) verbunden wird.

13. Die elektrische Messvorrichtung (10) nach einem der vorstehenden Ansprüche, wobei die elektrische Messvorrichtung (10) über einen eingeschalteten Betriebsmodus verfügt, wobei die Verarbeitungseinheit (14) so konfiguriert ist, dass die Statusanzeige (16) im eingeschalteten Betriebsmodus so gesteuert wird, dass mindestens eine Statusinformation und/oder mindestens ein Ergebnis eines internen Selbsttests auf der Statusanzeige (16) angezeigt wird, insbesondere Informationen über Ausfälle, für die eine anderweitige Anzeige ungeeignet wäre.

14. Die elektrische Messvorrichtung (10) nach einem der vorstehenden Ansprüche, wobei die elektrische Messvorrichtung (10) eine komplexe und präzise elektrische Messvorrichtung ist.

15. Ein Verfahren zum Auslesen mindestens einer Statusinformation einer elektrischen Messvorrichtung (10) in einem ausgeschalteten Zustand, mit folgenden Schritten:
- Bereitstellen der elektrischen Messvorrichtung (10) nach einem der vorstehenden Ansprüche,
- Bereitstellen der letzten Statusinformation der elektrischen Messvorrichtung (10), die in elektrischer Weise im ausgeschalteten Betriebsmodus der elektrischen Messvorrichtung (10) ausgelesen werden soll, sodass die letzte Statusinformation im ausgeschalteten Zustand der elektrischen Messvorrichtung (10) aufgerufen werden kann, und
- Auslesen der letzten Statusinformation in einem ausgeschalteten Zustand der elektrischen Messvorrichtung (10) von einer Statusanzeige (16) der elektrischen Messvorrichtung (10) durch das menschliche Auge oder durch Nutzung einer Erfassungsvorrichtung (38).

## Revendications

1. Dispositif de mesure électrique (10) comprenant au moins une unité de mesure électrique (12), une unité de traitement (14), un afficheur d'état (16) et une mémoire (18), dans lequel la mémoire (18) est configurée pour stocker au moins une information d'état du dispositif de mesure électrique (10), dans lequel le dispositif de mesure électrique (10) possède au moins un mode de fonctionnement hors tension, et dans lequel l'unité de traitement (14) est configurée pour commander l'afficheur d'état (16) dans le mode de fonctionnement hors tension de manière que la dernière information d'état du dispositif de mesure électrique (10) stockée dans la mémoire (18) soit affichée sur l'afficheur d'état (16).

2. Dispositif de mesure électrique (10) selon la revendication 1, dans lequel l'afficheur d'état (16) comprend au moins une zone d'affichage électrophorétique, en particulier dans lequel l'afficheur d'état est un afficheur électrophorétique.

3. Dispositif de mesure électrique (10) selon la revendication 1 ou 2, dans lequel l'information d'état affichée reste visible sur l'afficheur d'état (16) dans un état non alimenté de l'afficheur d'état (16).

4. Dispositif de mesure électrique (10) selon l'une quelconque des revendications précédentes, dans lequel la mémoire (18) est configurée pour stocker des données protégées cryptographiquement par une clé de licence, en particulier un composant logiciel devant faire l'objet d'un accès.

5. Dispositif de mesure électrique (10) selon l'une quelconque des revendications précédentes, dans lequel l'information d'état affichée comprend au moins une information lisible par ordinateur (32) et/ou au moins une information en clair (36), en particulier dans lequel l'information lisible par ordinateur (32) est procurée par un code *Quick Response* (34).

6. Dispositif de mesure électrique (10) selon la revendication 5, dans lequel l'information lisible par ordinateur (32) inclut un code créé cryptographiquement, authentifiant l'information d'état affichée.

7. Dispositif de mesure électrique (10) selon l'une quelconque des revendications précédentes, dans lequel l'information d'état affichée comprend des informations sur une clé de licence, le type de dispositif, le numéro de série, l'adresse de réseau sous protocole Internet, le nom de réseau, l'adresse de réseau, l'état d'étalonnage de l'unité de mesure électrique, la date d'expiration de l'étalonnage, au moins une option matérielle présente, au moins une option logicielle présente, au moins une option matérielle disponible ou compatible, au moins une option logicielle disponible ou compatible, l'état de fonctionnement, des informations d'état de marche du dispositif de mesure électrique, la raison de l'arrêt du dispositif de mesure électrique, des instructions de manipulation et/ou des ordres de travail généraux.

8. Dispositif de mesure électrique (10) selon l'une quelconque des revendications précédentes, dans lequel le dispositif de mesure électrique (10) comprend une interface utilisateur (20), en particulier dans lequel l'interface utilisateur (20) est procurée par l'afficheur d'état (16).

9. Dispositif de mesure électrique (10) selon l'une quelconque des revendications précédentes, dans lequel se trouve une unité de communication en champ proche (24) qui est connectée à l'unité de traitement (14).

10. Dispositif de mesure électrique (10) selon les revendications 8 et 9, dans lequel l'interface utilisateur (20) est procurée par l'unité de communication en champ proche (24).

11. Dispositif de mesure électrique (10) selon l'une quelconque des revendications précédentes, dans lequel se trouve un module d'affichage (26) qui est configuré pour recevoir une unité d'affichage normalisé utilisée comme afficheur d'état (16), en particulier dans lequel l'unité d'affichage normalisé est un afficheur à encre électronique.

12. Dispositif de mesure électrique (10) selon l'une quelconque des revendications précédentes, dans lequel se trouve un interposeur (30) qui est configuré pour interfacer l'afficheur d'état (16).

13. Dispositif de mesure électrique (10) selon l'une quelconque des revendications précédentes, dans lequel le dispositif de mesure électrique (10) possède un mode de fonctionnement sous tension, dans lequel l'unité de traitement (14) est configurée pour commander l'afficheur d'état (16) sous le mode de fonctionnement sous tension de manière qu'au moins une information d'état et/ou au moins un résultat d'autotest interne soi(en)t affiché(e)(s) sur l'afficheur d'état (16), en particulier des informations sur des défaillances qui sont impropres à être indiquées autrement.

14. Dispositif de mesure électrique (10) selon l'une quelconque des revendications précédentes, dans lequel le dispositif de mesure électrique (10) est un dispositif de mesure électrique complexe et précis.

15. Procédé permettant de lire au moins une information d'état d'un dispositif de mesure électrique (10) dans un état non alimenté, à l'aide des étapes suivantes :
- utiliser le dispositif de mesure électrique (10) selon l'une quelconque des revendications précédentes,
- utiliser la dernière information d'état du dispositif de mesure électrique (10) à lire de façon électrique sous un mode de fonctionnement hors tension du dispositif de mesure électrique (10), de manière que la dernière information d'état puisse être récupérée à l'état non alimenté du dispositif de mesure électrique (10), et
- lire la dernière information d'état à l'état non alimenté du dispositif de mesure électrique (10) à partir d'un afficheur d'état (16) du dispositif de mesure électrique (10) à l'aide d'un œil humain ou d'un dispositif de détection (38).
